Europäisches Patentamt

European Patent Office

Office européen des brevets

(19)

(11) Numéro de publication : **0 244 303 B1**

(12)

# FASCICULE DE BREVET EUROPEEN

(45) Date de publication du fascicule du brevet :
23.10.91 Bulletin 91/43

(51) Int. Cl.$^5$ : **G05G 23/02**, // F16C1/22, F16H55/24, F16B39/30

(21) Numéro de dépôt : **87400908.7**

(22) Date de dépôt : **17.04.87**

(54) Dispositif vis-écrou de rattrapage de jeux.

(30) Priorité : 30.04.86 FR 8606343

(43) Date de publication de la demande :
04.11.87 Bulletin 87/45

(45) Mention de la délivrance du brevet :
23.10.91 Bulletin 91/43

(84) Etats contractants désignés :
DE ES GB IT SE

(56) Documents cités :
FR-A- 585 894
FR-A- 720 079
GB-A- 340 521
GB-A- 2 044 384

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Chevance, Claude**
**12 Bis, rue Bergonié**
**F-91600 Savigny S/Orge (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue Saint-Denis, 75001 PARIS

## Description

La présente invention a pour objet un ensemble comprenant un dispositif vis-écrou, un poussoir associé à la vis et un organe élastique pouvant exercer sur la vis une poussée axiale, le poussoir, susceptible d'exercer sur la vis une poussée axiale opposée à la précédente, pouvant entraîner le déplacement de la vis par rapport à l'écrou, le filet de la vis présentant des angles d'hélice et de pression déterminés.

On sait que des jeux de fonctionnement apparaissent dans de très nombreux dispositifs au fur et à mesure de leur fonctionnement, divers moyens étant prévus pour compenser ces jeux au fur et à mesure de leur apparition. Ainsi par exemple, il est connu, dans les lève-glaces à câble en boucle fermée montés dans des portières de véhicules automobiles, de rattraper le jeu pris par le câble en raison de l'allongement de ce dernier lors de son vieillissement, au moyen d'un simple système de tendeur à ressort. Or, ce système présente un inconvénient consistant dans l'introduction d'un jeu désagréable entre la manivelle de commande et la glace.

On connaît également par le GB-A 2 044 384, un mécanisme de rattrapage de jeu, comportant un ressort hélicoïdal enroulé dans le filetage d'une tige filetée engagée dans un écrou.

Par ailleurs, le FR-A 585 894 décrit un dispositif vis-écrou dans lequel le filet de la vis (boulon) présente des angles d'hélice et de pression déterminés, choisis de manière que dans un premier sens, réversible, la vis puisse effectuer un mouvement hélicoïdal dans l'écrou, et que dans un second sens, irréversible, la vis sollicitée par un effort axial, ne puisse effectuer ni translation, ni rotation dans l'écrou.

Dans d'autres dispositifs connus tel qu'un moto-réducteur électrique, il apparaît un jeu au niveau de l'axe d'induit, et plus précisément entre les extrémités de l'axe portant les butées de bout d'axe et les pièces métalliques portées par le carter et qui assurent la tenue axiale de l'axe. Ce jeu est dû à l'usure des butées au cours du fonctionnement du moto-réducteur, proportionnelle à la durée de fonctionnement et peut dépasser 0,5 mm. Le jeu axial est réglé lors du montage par une simple vis en acier amenée en contact avec l'une des butées de bout d'axe, et n'est plus réajusté pendant toute la durée de vie du moteur. Il en résulte, au cours du fonctionnement du moto-réducteur, l'apparition progressive de bruit.

Ainsi, dans de nombreux systèmes mécaniques ou électromécaniques connus, ou bien les jeux apparaissant progressivement en cours de fonctionnement ne sont pas du tout rattrapés, ou bien il est prévu des moyens de rattrapage de jeu, mais qui en fait ne résolvent pas le problème de manière satisfaisante.

L'invention a donc jour but de réaliser un dispositif de rattrapage automatique de jeu, applicable non seulement à des systèmes tels que ceux précités qui concernent l'industrie automobile, mais également à de très nombreux autres dispositifs dans d'autres domaines techniques, par exemple des bicyclettes, des motos, etc.

Conformément a l'invention, les angles d'hélice et de pression de la vis sont choisis de manière que dans un premier sens dit réversible, la vis puisse sous la poussée axiale exercée dans ce sens par un organe élastique, effectuer un mouvement hélicoïdal dans l'écrou chaque fois que disparait ou se réduit suffisamment la force exercée par le poussoir, et que dans un second sens dit irréversible, opposé au premier, la vis sollicitée par l'intermédiaire du poussoir par un effort très supérieur a l'effort de l'organe élastique dans ce second sens ne puisse effectuer ni translation, ni rotation dans l'écrou.

Ainsi le jeu susceptible de se produire entre deux pièces associées a la vis est automatiquement compensé au fur et a mesure de son apparition par le déplacement unidirectionnel et irréversible de la vis sous l'action de l'organe élastique.

Suivant un mode de réalisation de l'invention dans lequel le filet de la vis présente en section deux flancs inclinés sur une perpendiculaire à l'axe de la vis, les angles de pression des deux flancs sont différents, l'un étant de préférence compris entre zéro et une valeur faible, et l'autre angle de pression étant élevé.

L'angle de pression égal à 0 ou faible correspond au sens réversible de translation et de rotation de la vis et permet donc le rattrapage du jeu par déplacement de la vis dans ce sens, tandis que la vis ne peut se déplacer dans le sens inverse. En effet, le flanc du filet dont l'angle de pression est élevé, ayant une valeur convenablement choisie, s'oppose à tout retour en arrière de la vis lorsqu'il est appliqué sur la surface correspondante de l'écrou par le poussoir.

D'autres particularités et avantages de l'invention apparaitront au cours de la description qui va suivre, faite en référence aux dessins annexés qui en illustrent a titre d'exemples non limitatifs plusieurs modes de réalisation :

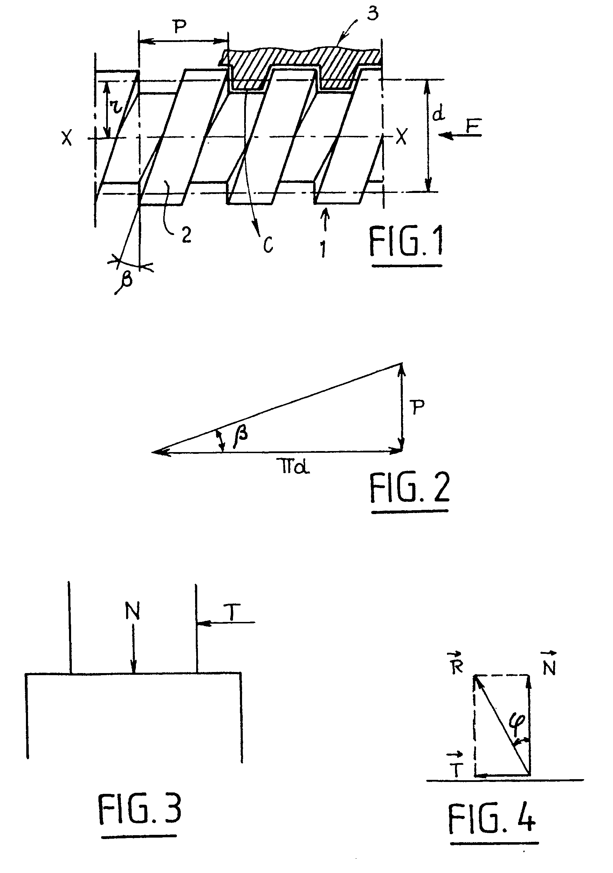

   – les Figures 1 à 4 sont des schémas explicatifs de rappel de notions connues relatives aux systèmes vis-écrou, fournis afin de faciliter la compréhension de l'invention :

     . la Figure 1 est une vue en élévation partielle d'une vis et l'écrou associé;

     . la Figure 2 est un schéma montrant le développé du filet dune vis;

     . la Figure 3 est un schéma montrant les forces qui s'exercent sur les surfaces en contact de deux corps dont l'un glisse sur l'autre;

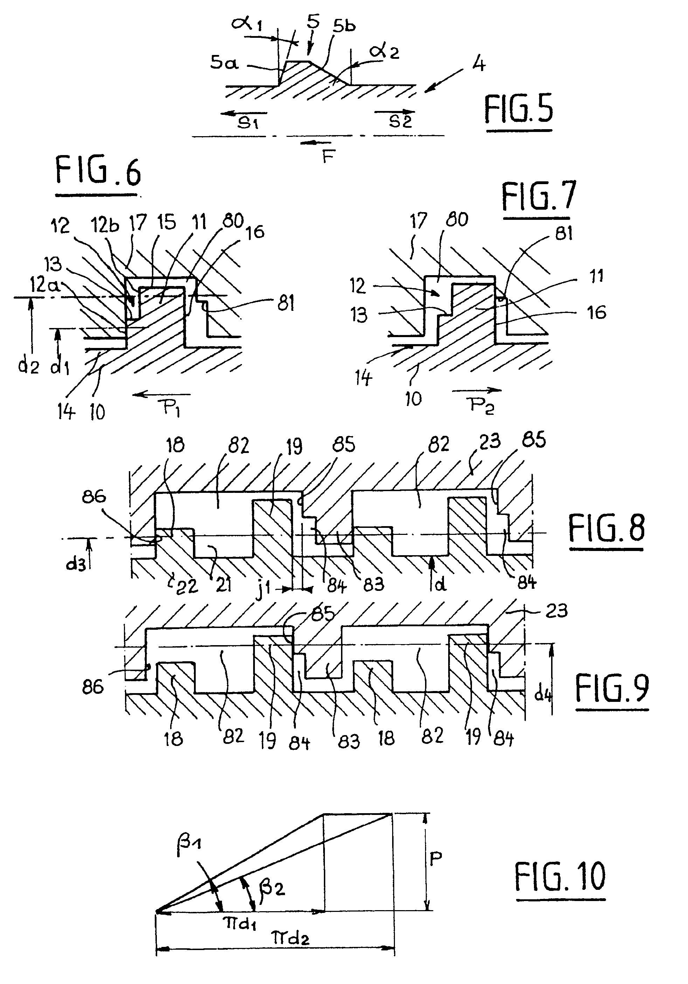

     . la Figure 4 est un schéma explicatif de l'angle de frottement entre les deux surfaces en contact de la Figure 3;

     . la Figure 5 est une vue schématique en coupe axiale partielle d'une vis selon un premier mode de réalisation de l'invention;

– les Figures 6 et 7 sont des vues en coupe axiale partielle d'un système vis-écrou selon un second mode de réalisation de l'invention dans deux positions différentes;

– les Figures 8 et 9 sont des vues en coupe axiale partielle analogues aux Figures 6 et 7 d'un troisième mode de réalisation du système vis-écrou selon l'invention;

– les Figures 8A et 9A sont des vues analogues aux Figures 8 et 9 d'une variante de la réalisation illustrée sur celles-ci;

– la Figure 8B est une vue en élévation longitudinale de la vis faisant partie de la variante des Figures 8A et 9A;

– la Figure 10 est un schéma du développé du filet de la vis des Figures 6 et 7;

– les Figures 11 et 12 sont des vues en coupe axiale partielle d'un système vis-écrou suivant un quatrième mode de réalisation de l'invention;

– les Figures 13 et 14 sont des vues en coupe axiale partielle d'un dispositif vis-écrou suivant un cinquième mode de réalisation de l'invention;

– la Figure 13A montre une variante de la réalisation de la Figure 13;

– la Figure 15 est une vue mi-coupe, mi-élévation d'un sixième mode de réalisation du système vis-écrou selon l'invention;

– la Figure 16 est une vue en perspective dune porte de véhicule automobile dont le panneau intérieur a été enlevé et qui est munie d'un système de lève-glace a câble susceptible d'être équipé d'un dispositif vis-écrou selon l'invention pour le rattrapage du jeu de fonctionnement du câble;

– la Figure 17 est une vue simplifiée en élévation et coupe partielle d'un système de lève-glace a câble muni d'un dispositif vis-écrou selon l'invention, pouvant être monté dans la porte de véhicule visible à la Figure 16;

– la Figure 18 est une vue schématique en élévation et coupe partielle d'une application de l'invention au rattrapage automatique du jeu dans un moto-réducteur électrique;

– la Figure 19 est une vue simplifiée on élévation d'une application du dispositif vis-écrou selon l'invention au rattrapage du jeu dans un frein à main;

•– la Figure 20 est une vue en élévation longitudinale d'un système vis-écrou associé à un poussoir et a un organe élastique salon le principe de l'invention;

– la Figure 21 est un graphique donnant les valeurs du rendement du système vis-écrou en fonction des angles d'hélice et de frottement de la vis.

On voit à la Figure 1 une vis 1 dont le filet 2 est engagé dans le taraudage correspondant d'un écrou 3. Le filet 2 est incliné sur la perpendiculaire à l'axe X-X de la vis 1 d'un angle d'hélice β, le filet 2 ayant un pas p.

La Figure 2 montre le développé du filet 2 et l'angle d'hélice β pour lequel tangente β = p/πd.

Par ailleurs, on définit le coefficient de frottement f entre deux surfaces appartenant à des objets différents par le rapport entre la force T (Figures 3 et 4) nécessaire pour faire glisser les deux surfaces l'une par rapport à l'autre et dirigé suivant le sens du déplacement, et la force N, qui est l'effort presseur appliquant les deux surfaces l'une sur l'autre. L'angle φ de frottement entre les deux surfaces est l'angle entre la résultante R de N et T (Figure 4) et la force N.

Le rendement du système vis 1-écrou 3 dans lequel la vis est soumise à une force axiale F (Figure 1) est par définition, le rapport de la puissance obtenue a la sortie par la puissance fournie à l'entrée. Dans ce système, on fournit une force F dans l'axe de la vis 1, qui conduit à un déplacement linéaire de celle-ci et on récupère un couple C sur l'écrou 3. La force tangentielle exercée sur l'écrou 3 étant Ft, on montre que le rendement est défini par l'expression ci-dessous

$$\eta = \frac{tg\,(\beta{-}\varphi)}{tg\beta}$$

D'autre part, r étant le rayon moyen de la vis, le couple C est défini par la relation suivante

$$C = Fr\,tg\,(\beta - \varphi)$$

et la force tangentielle est

$$Ft = F\,tg\,(\beta - \varphi)$$

En reprenant la formule du rendement $\eta$, on constate que lorsque l'angle d'hélice β est inférieur à l'angle de frottement φ, le rendement $\eta$ est négatif ou nul. En d'autres termes, lorsqu'on pousse sur la vis 1, l'écrou 3 ne tourne pas.

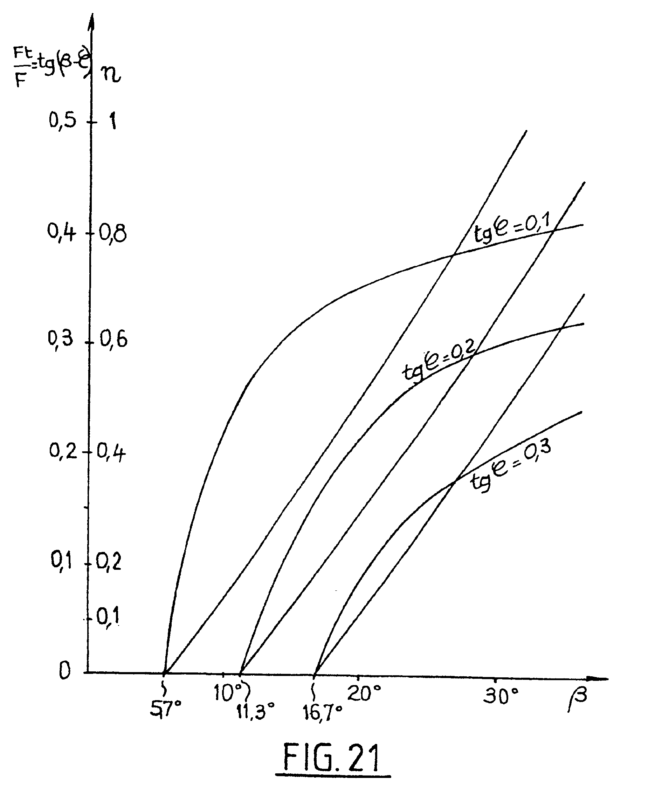

Le graphique de la Figure 21 illustre l'évolution du rapport Ft/F, c'est-à-dire du rendement $\eta$, en fonction de l'angle d'hélice β porté en abscisses et de l'angle de frottement φ . Les courbes obtenues peuvent être utilisées pour la détermination de l'angle d'hélice β en fonction du coefficient de frottement :

$$f = tg\varphi.$$

Enfin, l'angle de pression α est l'angle d'inclinaison du flanc du filet 2 (surface sur laquelle s'effectue le contact entre la vis 1 et l'écrou 3) par rapport à la perpendiculaire à l'axe X-X de la vis 1.

On montre que le rendement $\eta$ dépend de l'angle de pression α et s'exprime par la formule :

$$\eta = \frac{Cos\alpha\,tg\beta - tg\varphi}{tg\beta\,(cos\alpha + tg\varphi\,tg\beta)}$$

Lorsque α = 0, on retrouve l'expression précédente du rendement $\eta$ = tg (β-φ)/tgβ.

On constate que plus l'angle de pression A augmente, plus le rendement n diminue.

Ces rappels explicatifs étant faits, on décrira maintenant en référence à la Figure 5 un premier mode de réalisation de l'invention.

D'une manière générale, l'invention prévoit que les angles d'hélice β et de pression φ sont choisis de manière que dans un premier sens dit réversible S1, la vis 4 puisse sous la poussée axiale F exercée dans ce sens, effectuer une translation et une rotation dans l'écrou, et que dans un second sens S2 dit irréversible, opposé au premier, la vis 4 subissant une poussée axiale dans ce second sens S2 ne puisse effectuer ni translation, ni rotation dans l'écrou.

Dans l'exemple de réalisation de la Figure 5, on voit que le filet 5 présente deux flancs 5a et 5b dont les angles de pression sont très différents : l'angle de pression α1 du flanc 5a est très faible (quelques degrés) et peut d'ailleurs être nul, tandis que l'angle de pression α2 du second flanc 5b, oriente dans le sens irréversible S2, est élevé.

Le résultat de cet agencement des flancs 5a, 5b est le suivant : dans le sens reversible S1, la surface d'appui est celle du flanc 5a et le rendement s'exprime par :

$$\eta 1 = \frac{tg\ (\beta - \varphi)}{tg\beta} > 0$$

Dans le sens irréversible S2, la surface d'appui est celle du flanc 5b et le rendement est :

$$n2 = \frac{\cos\alpha\ tg\beta - tg\varphi}{tg\beta\ (\cos\alpha + tg\beta\ tg\varphi)} < 0$$

Les deux conditions ci-dessus pour le rendement η conduisent a la détermination d'un intervalle de valeurs de l'angle β , cet intervalle dépendant de la valeur de α . Plus α est grand, plus cet intervalle est élevé. La valeur limite supérieure de α est la valeur de l'angle de coincement, et la valeur limite inférieure de α est la valeur pour laquelle il n'existe aucun angle d'hélice β vérifiant les deux conditions précitées.

A titre d'exemple numérique indicatif, si l'on part d'un coefficient de frottement entre les surfaces des flancs de la vis et de l'écrou tel que tgφ = 0,3, c'est-a-dire φ = 16,7°, on doit avoir η1 > 0 pour obtenir la reversibilité, d'ou on deduit la condition β > a 16,7°.

Un coefficient de frottement associé a un angle de frottement β = 16,7° est éleve et correspond donc a un frottement important entre les surfaces. Donc si pour un tel coefficient de frottement la réversibilité est obtenue dans le sens considéré, cette réversibilité sera de toute façon conservée si l'état des surfaces en contact se détériore en cours de fonctionnement du dispositif, tant que le coefficient de frottement tgφ est inférieur a 0,3.

Dans le sens irréversible, on choisit des surfaces ayant un frottement le plus faible possible, le coefficient de frottement dépendant de plusieurs facteurs, notamment les matériaux utilisés, les états de surface, la lubrification, etc. Par exemple, on peut choisir un coefficient de frottement correspondant à un angle de frottement φ tel que tgφ = 0,1.

Pour obtenir l'irréversibilité dans ce sens, il faut satisfaire à la condition η2 < 0, d'où l'on déduit en partant de la relation précédente les conditions suivantes :

$$\alpha = Arc\ cos\ \frac{0,1}{tg\beta}$$

$$\beta < Arc\ tg\ \frac{0,1}{\cos\alpha}$$

L'angle de pression minimum pour assurer l'irréversibilité dans le sens S2 et la réversibilité dans l'autre sens S1 est obtenu pour β = 16,7°, d'où l'on déduit

$$\alpha > 70,53°$$

Ainsi, l'irréversibilité dans le sens S2 étant obtenue en partant de surfaces dont le coefficient de frottement est le plus faible possible, on est assuré que cette irréversibilité sera de toute façon maintenue pendant la durée de fonctionnement du dispositif si le coefficient de frottement vient à se détériorer.

La Figure 20 montre le principe d'un dispositif vis-écrou selon l'invention, soumis à un effort axial alterné dans les deux sens, tolérant le vissage dans l'un des deux sens et l'interdisant dans l'autre. Dans ce dispositif, la vis 6, pourvue d'un filet 7 satisfaisant aux conditions expliquées ci-dessus, est logée dans un corps-ecrou 8, et sollicitee dans le sens irreversible par un poussoir 9 exerçant sur la vis 6 un effort axial P, et dans le sens oppose reversible par un ressort helicoidal 11 prenant appui sur le fond de l'ecrou 8.

Entre la vis 7 et l'écrou 8 -comme dans toutes les formes de realisation du dispositif vis-ecrou selon l'invention- sont reserves deux jeux de fonctionnement (non visibles sur la Figure 20) :

– un premier jeu que l'on peut appeler "jeu minimum de fonctionnement", correspondant a la distance axiale dont doit se déplacer la vis pour que son filet parse d'un appui contre l'écrou dans un sens a l'appui contre l'ecrou dans l'autre sens;

– un second jeu, obtenu de la meme façon que le premier jeu, necessaire pour permettre la recupération des deformations elastiques du systeme sur lequel est mis en oeuvre le dispositif vis-ecrou selon l'invention. Ce second jeu est donc, comme le premier, obtenu par exemple en diminuant la taille du filet de la vis ou en augmentant l intervalle entre deux filets de l'écrou. Les deformations elastiques du systeme sont par exemple celles subies par dilatation thermique, comme dans un motoreducteur electrique, ou par allongement de certaines pieces, notamment le cable dans une commande par cable en boucle fermee.

Au fur et a mesure qu'un jeu apparait, il est rattrape par la poussee du ressort 11 sur la vis 7 qui se deplace donc progressivement dans ce sens reversible, tandis que cette vis ne peut se deplacer dans le sens inverse, irreversible, sous l'effet de la poussee P du poussoir 9.

On peut determiner les valeurs limites superieures des angles α et β. A titre d'exemple numerique non limitatif, en partant des mêmes valeurs que ci-dessus pour tgφ (0,1 et 0,3) :

La valeur limite de l'angle de pression α est obtenue en prenant le complément de l'angle de frottement 16,7°, c'est-à-dire 73,3° qui corrospond à l'angle au-delà duquel on entre dans le domaine des cônes de coincement, pour tgφ = 0,3 (φ = 16,7°)

$$\alpha \text{ limite } = 73,3°$$

α sera donc dans cet exemple indicatif, compris entre 70,53° et 73,3°.

On peut déduire de la valeur limite supérieure ci-dessus de α, la valeur limite correspondante de l'angle d'hélice β, c'est-à-dire la limite supérieure de β pour que la condition d'irréversibilité soit assurée :

$$\beta < 22,05°$$

β devant ainsi être compris entre cette valeur maximum et 16,7°.

Dans le premier mode de réalisation de l'invention décrit ci-dessus, chaque flanc du filet de la vis a un angle de pression propre, l'angle d'hélice β étant constant et supérieur a l'angle de frottement φ.

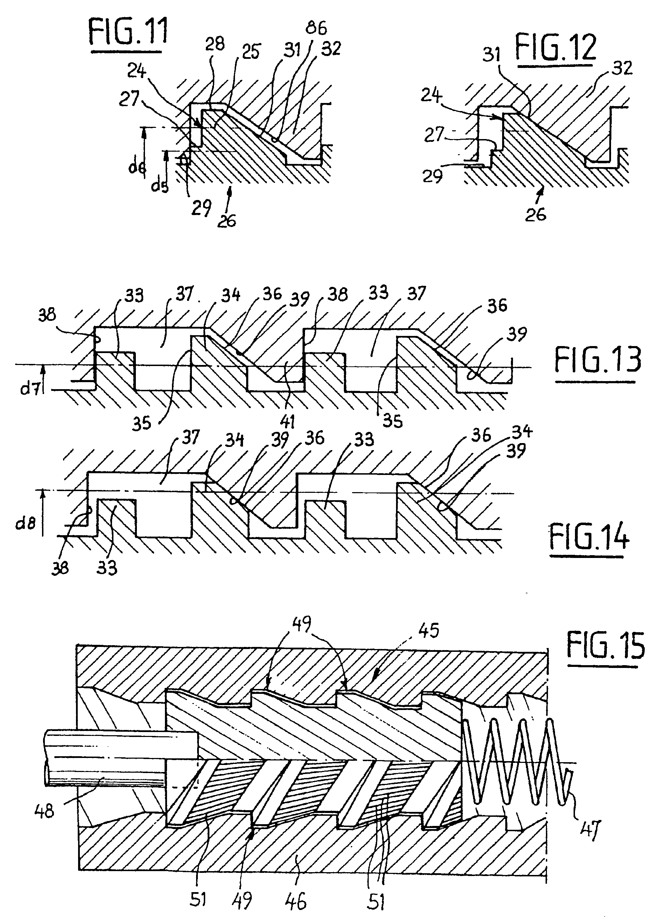

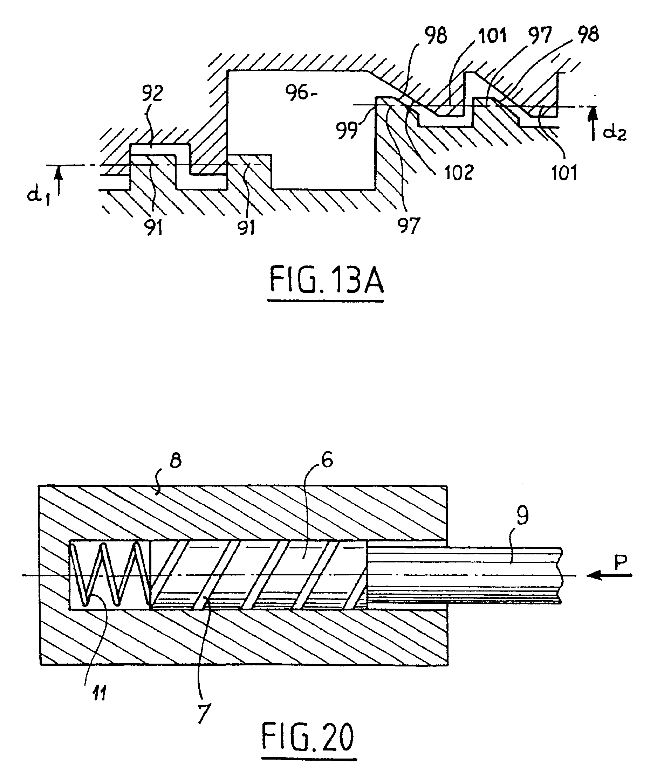

Mais l'invention peut également être mise en oeuvre en faisant varier l'angle d'hélice β, le pas p de la vis restant constant ainsi que son angle de pression α. En effet, la tangente de l'angle β étant tg β = p/πd, on constate que lorsque le diamètre d augmente, tgβ diminue, de même que l'angle β : ainsi sur la Figure 10, on voit que pour un pas p donné et deux diamètres de vis différents d1 et d2, les angles d'hélice β1 et β2 correspondants sont différents, avec ici β1 supérieur à β2. D'autre part, d'après le graphique de la Figure 21 ou la relation tg(β-φ)/tgβ, on constate que plus β diminue, plus le rendement η diminue, et devient nul lorsque β = φ.

En realisant une vis a deux diametres de contacts (diametres moyens) différents d1 et d2, on obtient donc deux angles d'hélice β1 et β2 puisque le pas p est fixe. On peut alors choisir les diamètres d1 et d2 de telle façon qu'a l'angle β1 corresponde un sens reversible, et a β2 corresponde un sens irréversible. D'autre part, l'angle de frottement C doit être compris entre β1 et β2, soit :

$$\beta 1 > \varphi > \beta 2$$

L'invention prevoit deux modes de réalisation de ce principe :

– dans la realisation des Figures 6 et 7, la vis 10 comporte un filet 11 dont les angles de pression α sont nuls, ses flancs 12, 16 étant en effet perpendiculaires a l'axe de la vis 10. Le flanc 12 est profilé en marche d'escalier de façon a présenter un gradin 13 entre la surface du noyau 14 de la vis 10 et le sommet 15 du filet 11, tandis que le second flanc 16 est rectiligne. Le gradin 13 relie ainsi un flanc inferieur 12a et un flanc superieur 12b attenant au sommet 15. Au flanc 12 correspondent deux diametres différents d1 et d2, des parties respectives 12a, 12b, qui sont choisis de maniere a obtenir pour le flanc 12 un sens réversible par poussee de sa partie 12a comprise entre le gradin 13 et la surface du noyau 14 contre l'écrou 17, tandis qu'une poussee P2 opposée du flanc 16 sur l'écrou 17 correspond au sens irréversible de la vis 10 (Figure 7). Le taraudage 80 recevant le filet 11 est delimite, du cote du flanc 12 par une paroi rectiligne, et du coté du flanc 16 par une paroi également rectiligne mais presentant un décrochement 81, elargissant le logement du filet au niveau de la partie supérieure 12b du flanc 12.

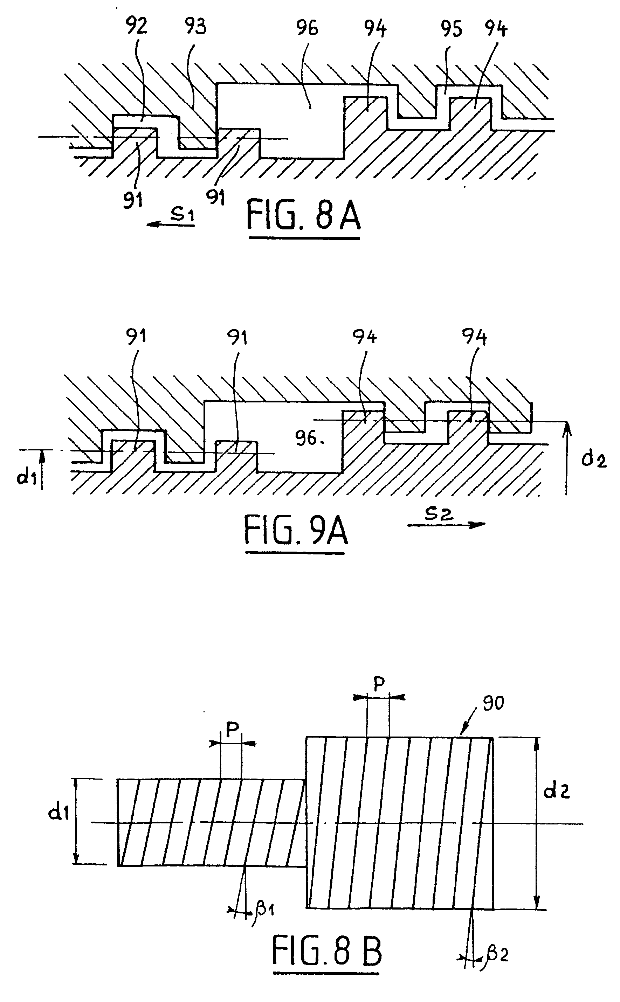

Le second mode de realisation du principe expose ci-dessus est illustre aux Figures 8 et 9, sur lesquelles on voit le filet de la vis 22 est constitue en section axiale de deux dents contigues 18, 19 separees par un intervalle 21 et de hauteurs inegales. Ainsi la hauteur de la dent 18, donc le diamètre moyen d3 correspondant de la vis 22, sont inférieurs a la hauteur et au diamètre moyen correspondant d4 de la dent 19, le diametre d de la vis 22 restant constant d'un bout a l'autre de celle-ci, et comme précedemment les angles de pression des dents 18, 19 sont nuls. Dans l'écrou 23 est usine un taraudage 82 recevant les deux filets des dents 18, 19 avec un jeu axial (j1) correspondant aux jeux de fonctionnement minimum et de recuperation des déformations elastiques comme expliqué precedemment.

Vues en section axiale, deux cavites consecutives du taraudage 82 sont separees par un filet saillant 83 dans lequel, est menage, du cote de la dent 19, un decrochement 84 delimitant sur le filet 83 une face 85 d'appui de la dent 19 lorsque la vis 22 est actionnee dans le sens reversible (Figure 9). A cet appui sur la face 85 correspond un diametre moyen d4 de la vis 22.

Le sens reversible de fonctionnement est celui dans lequel la vis 22 subit une poussee appliquant les dents 18 contre les faces radiales 86 du taraudage 82 opposees aux faces 85 (Figure 8).

Dans la variante des Figures 8A-9A-8B, la vis 90 est constituee de deux parties de diametres moyens differents d1 et d2 avec d2 > d1, le pas p du filet etant constant. La partie du filet correspondant au diametre d2 a donc un angle d'hélice β2 inferieur a l'angle d'helice β1 de la partie de diametre d1.

Les dents 91 de diametre moyen d1 sont reçues dans un taraudage 92 de l'écrou 93, et les dents 94 de diametre moyen d2 sont reçues dans un taraudage 95 complementaire, les deux dents terminales 91 et 94 s'engageant dans un logement 96 convenablement usiné dans l'écrou 93. Les taraudages 92, 95, 96 sont dimensionnés de façon a reserver aux filets de la vis 90 un jeu minimum de fonctionnement et de recuperation des déformations élastiques comme precédemment expliqué.

A la Figure 8A, les dents 91 sont en appui contre l'écrou 93 lorsque la vis 90 subit une poussée axiale S1 dans le sens reversible, et a la Figure 9A ce sont les dents 94 qui sont en appui contre l'écrou lorsque la vis est sollicitee dans le sens contraire irreversible S2.

## Variation simultanée de l'angle de pression β et de l'angle d'hélice α

Dans d'autres formes de realisation decrites ci-apres en reference aux Figures 11 a 14, l'invention prevoit de combiner les realisations precedentes pour realiser une vis presentant des angles de pression et d'hélice differents selon le sens de manoeuvre, le pas p restant le meme dans les deux sens de manoeuvre, reversible et irreversible. Une telle combinaison permet d'augmenter les performances du systeme vis-écrou en diminuant son encombrement.

Dans la forme de realisation illustree aux Figures 11 et 12, un flanc 24 du filet 25 de la vis 26 est profilé en marche d'escalier en presentant un gradin 27 entre le sommet 28 du filet 25 et la surface 29 du noyau de la vis 26, les angles de pression des portions rectilignes du flanc 24 situees de part et d'autre du gradin 27 etant nuls. Complementairement, le second flanc 31 de la vis 26 a un angle de pression α élevé. Ainsi au flanc 24 est associé l'angle d'hélice β1 correspondant au diamètre d5 et au flanc 31 est associé l'angle d'hélice correspondant au diamètre d6.

Le taraudage de l'écrou 32 a un profil comportant une paroi perpendiculaire a l'axe de la vis 26, destinée a venir en contact avec la portion du flanc 24 comprise entre la surface 29 et le gradin 27, et une paroi 86 en regard du flanc 31 avec la même inclinaison que ce dernier.

Lorsqu'une poussée axiale sur la vis 26 applique le flanc 31 sur la surface 86 (Figure 12), la manoeuvre de la vis 26 devient irreversible dans ce sens, ce contact la bloquant en rotation et en translation. Dans le sens opposé (Figure 11) une poussée sur la vis 26 applique la portion inférieure du flanc 24 contre la paroi de l'écrou, et la vis 26 effectue une translation ainsi qu'une rotation (sens réversible).

Dans le mode de réalisation des Figures 13 et 14, le filet est constitué en section axiale par deux dents 33, 34 de hauteurs inégales, la hauteur de la dent 34 étant supérieure a celle de la dent 33 et le diamètre de la vis étant constant. Les flancs de la dent 33 ont des angles de pression nuls ou pratiquement nuls, ainsi que le flanc 35 de la dent 34 tourné vers la dent 33. Par contre, le second flanc 36 est incliné sur la perpendiculaire a l'axe de la vis d'un angle de pression elevé (environ 60 degrés dans l'exemple représenté).

L'écrou associé comporte un taraudage 37 recevant les deux dents 33, 34, avec un jeu suffisant, ce taraudage 37 étant délimité du côté de la dent 33 par une paroi radiale 38 orthogonale a l'axe de la vis et du côté de la face inclinée 36 par une paroi 39 de même inclinaison. Un épaulement annulaire 41 délimité par les parois 38 et 39 pénetre avec jeu entre deux dents consécutives 34 et 33, et ces dernières ont respectivement des diamètres moyens d8 et d7 d'appui contre les parois associées.

Dans le sens réversible du dispositif (Figure 13) les dents 33 sont en appui contre les parois 38, et dans le sens irréversible les dents 34 sont en appui par leurs faces 36 contre les parois 39 (Figure 14).

Lorsque la vis subit une poussée axiale de la droite vers la gauche en considérant la Figure 13, les dents 33 sont appliquées contre les surfaces en regard de l'écrou (surfaces perpendiculaires à l'axe de la vis) dans le sens réversible de manoeuvre de la vis. Lorsque la poussée axiale subie par la vis est de sens opposé à la précédente (Figure 14), le flanc 36 vient s'appliquer sur les surfaces inclinées 39 et la vis est alors bloquée en translation et en rotation, ce sens de manoeuvre de la vis étant donc irréversible.

β1 et β2 étant respectivement les angles d'hélice des dents 33 et des dents 34, le rendement dans le sens réversible s'exprime par l'expression:

$$\eta 1 = \frac{tg(\beta 1 - \varphi)}{tg\beta 1} > 0$$

et le rendement dans le sens irréversible s'exprime par :

$$\eta 2 = \frac{\cos\alpha \, tg\beta 2 - tg\varphi}{tg\beta 2 \, (\cos\alpha + tg\beta 2 \, tg\varphi)} < 0$$

La variante de la Figure 13A diffère de celle des Figures 8A-9A par le fait que les dents 94 sont remplacées par des dents 97 dont les faces 98 tournées dans la direction opposée aux dents 91 ont un angle de pression élevé, les autres faces 99 des dents 97 conservant un angle de pression nul.

Corrélativement, l'écrou comporte, en regard du filet constitué par les dents 97, des filets 101 pénétrant avec jeu entre deux dents consécutives 97 et dont les parois 102 sont parallèles aux faces inclinées 98.

Dans les formes de réalisations décrites ci-dessus, on a supposé que le coefficient de frottement des surfaces de la vis et de l'écrou pouvait être déterminé avec une précision suffisante. Lorsque cela n'est pas le cas, les solutions décrites ne sont plus applicables. En effet, moins le coefficient de frottement est connu, plus l'intervalle des valeurs possibles de ces angles est réduit.

Pour résoudre cette difficulté, l'invention prévoit dans de tels cas de réaliser un faible coefficient de frottement sur le flanc du filet qui travaille dans le sens réversible, et par contre un coefficient de frottement élevé sur le flanc du filet qui travaille dans le sens irréversible.

On voit ainsi sur la Figure 15 un mode de réalisation de l'invention dans lequel la vis 45, logée dans un écrou 46, sollicitée d'un côté par un ressort 47 dans le sens réversible de manoeuvre et du coté opposé par un poussoir 48 dans le sens irréversible, comporte des filets 49 dont l'un des flancs a un angle de pression élevé et sur lequel sont usinées les stries 51 d'un moletage. La vis 45 est réalisée en un matériau plus dur que celui de l'écrou 46, afin que les stries 51 pénétrent dans le flanc correspondant du taraudage de l'écrou et qu'il y ait ainsi interférence de matière entre la vis 45 et l'écrou 46. Ce dernier peut également porter des stries compatibles avec les stries 51 de la vis 45.

A titre d'exemple, la vis 45 peut être en acier ou éventuellement en un matériau thermodurcissable, tandis que l'écrou 46 est réalisé en polyamide chargé de fibres de verre ou en acétal.

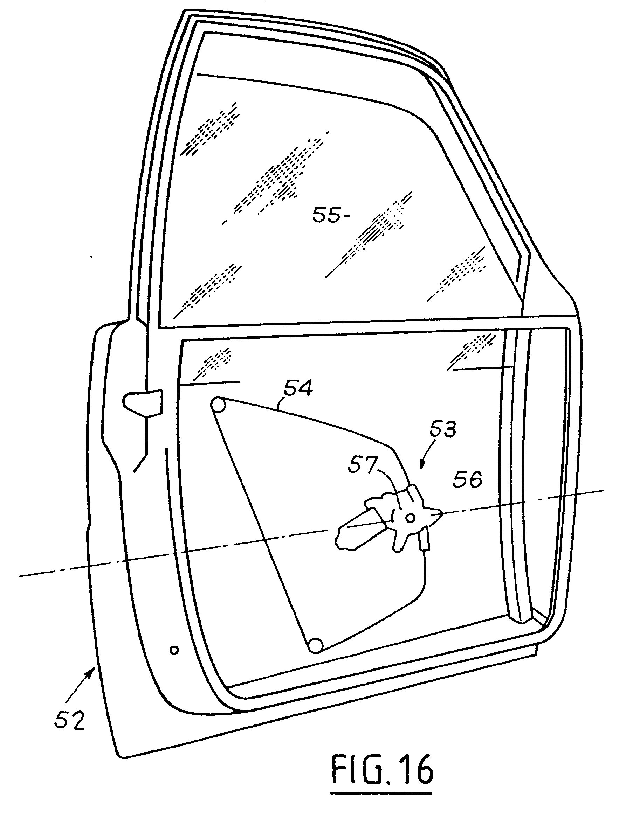

Les Figures 16 à 19 illustrent plusieurs applications possibles du système vis-écrou selon l'invention au rattrapage automatique du jeu dans divers mécanismes.

1) On voit à la figure 16 une porte 52 de véhicule automobile à l'intérieur de laquelle est monté un dispositif lève-glace 53 à câble 54 en boucle fermée, par exemple BOWDEN d'un type classique. La glace 55 guidée par une glissière est entraînée par le câble 54 passant dans une gaine 56 jusqu'à un tambour 57 sur lequel il s'enroule. Ce tambour 57 peut être actionné soit par une manivelle (lève-glace manuel), soit par un moto-réducteur (lève-glace électrique).

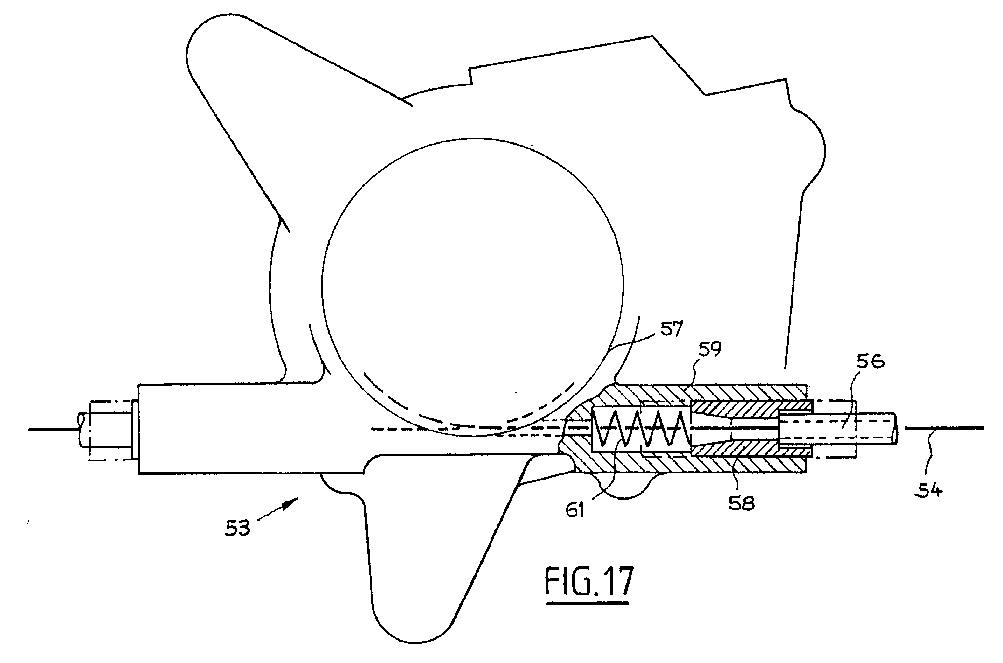

Le dispositif vis-écrou selon l'invention appliqué à ce lève-glace 53, est représenté à la Figure 17 qui montre que la gaine 56 s'engage par son extrémité dans une vis 58 profilée conformément a l'un des modes de réalisation décrit ci-dessus, cette gaine 56 faisant pour la vis 58 office de poussoir. La vis 58 est logée dans un carter-écrou 59 dont le taraudage est profilé de manière conjuguée au filetage de la vis 58, suivant l'un des modes de réalisation décrits ci-dessus. La vis 58 est sollicitée axialement par un ressort 61 prenant appui sur le fond du logement du carter 59, dans le sens axial opposé à celui de la poussée exercée par la gaine 56. Le jeu apparaissant progressivement sur le câble 54 en cours de fonctionnement du leve-glace 53 est ainsi automatiquement rattrape par déplacement de la vis 58 dans le sens reversible, donc vers la droite de la Figure 17, sous la poussee du ressort 61, et ce chaque fois que la force axiale exercee par la gaine poussoir 56 disparait ou se reduit suffisamment (comme de maniere generale dans toutes les applications de l'invention). Inversement la poussee de la gaine 56 ne peut ramener la vis 58 en arriere, meme si cette poussee est tres supérieure a celle du ressort 61.

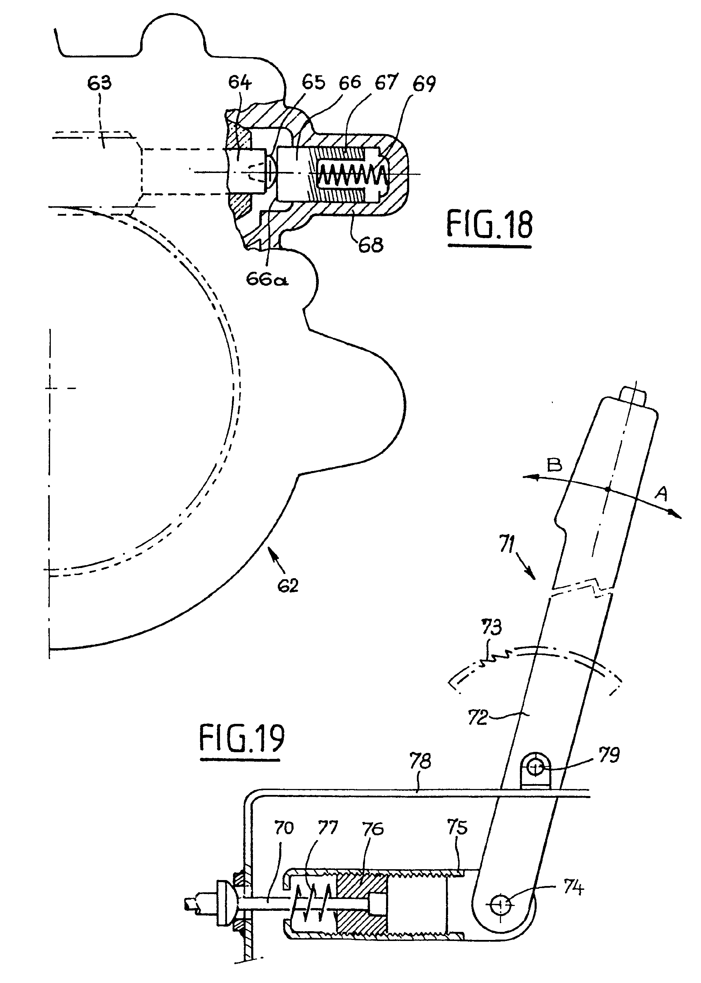

2) Dans l'application de la Figure 18, le dispositif vis-écrou est monte dans un moto-réducteur électrique 62, utilisable pour la commande de divers mecanismes, par exemple des accessoires de vehicules automobiles. Ce moto-reducteur 62 comporte un axe 63 dont les extrémités 64 (une seule est visible sur la Figure 18) sont munies de butees 65 qui viennent elles-memes s'appliquer sur les faces planes 66a de butées 66, formees par les extremites de vis 67 conformes a l'invention. Chaque vis 67 est logee dans un carter-ecrou 68 egalement profile de maniere conjuguee aux filets de la vis 67. Un ressort 69 place en appui sur le fond du carter-ecrou 68 penetre a l'interieur de la vis 67 sur laquelle il exerce, dans le sens réversible, une force axiale opposee a la poussee antagoniste de la butee 65. De ce fait, le jeu axial susceptible d'apparaitre en cours de fonctionnement entre les butées 65 et 66 est automatiquement compense par la progression des vis 67 sous l'action des ressorts 69, de sorte que l'arbre 63 est maintenu en contact avec les butees 66, et ce pendant toute la duree de vie du moto-reducteur 62.

3) Dans la realisation de la Figure 19, le systeme vis-écrou selon l'invention est applique au rattrapage automatique du jeu du cable 70 d'un frein a main 71, par exemple de moto ou de bicyclette ou d'une commande d'embrayage. Ce frein comporte un levier manuel 72 cooperant avec une cremaillére 73, articule en 74 sur un carter-ecrou 75 contenant une vis 76 conforme a l'invention, et sollicitee dans le sens reversible de rattrapage automatique du jeu du cable 70 par un ressort 77 loge dans le carter 75 et coaxial au câble 70. Le levier 72 traverse un capot 78 portant un axe 79 d'articulation autour duquel le levier 72 peut basculer (fléches A et B).

Les applications du système-écrou selon l'invention illustrees aux Figures 16 a 19 ne sont que des exemples parmi les très nombreuses applications possibles de l'invention.

On donnera ci-apres des exemples numeriques non limitatifs de mise en oeuvre de l'invention :

A - Coefficient de frottement connu

1 - Variation de l'angle $\alpha$, avec $\beta > \varphi$

Supposons $\mathrm{tg}\varphi = 0.2$ d'ou $\varphi = 11{,}31$ degres
Supposons $\beta = 22{,}04°$, diametre moyen de la vis $d = 10$ mm et $p = 12{,}7$ mm.

Conditions de fonctionnement :

* Sens reversible :
$$\eta_1 = \frac{\mathrm{tg}\,(\beta - \varphi)}{\mathrm{tg}\beta} = 0{,}468$$
* Sens irreversible :
avec $\alpha = 74°$
$$\eta_2 = \frac{\cos\alpha\,\mathrm{tg}\beta - \mathrm{tg}\varphi}{\mathrm{tg}\beta\,\cos\alpha + \mathrm{tg}\beta\,\mathrm{tg}\varphi}$$
soit
$$\eta_2 = \frac{\cos(74)\,\mathrm{tg}(22{,}04°) - \mathrm{tg}(11{,}25°)}{\mathrm{tg}(22{,}04°)\,[\cos(74) - \mathrm{tg}(2{,}04)\mathrm{tg}(11{,}35°)]} < 0$$

\* La valeur absolue de η (rendement) n'a pas d'importance, seul importe le fait que le rendement soit négatif.

On constate donc que par simple introduction d'un angle $\alpha$ de 74°, on passe d'un rendement de 0,47 à un rendement négatif.

2 - <u>Variation de l'angle β</u>

Supposons que $tg\varphi = 0,2$ et $p = 6$ mm

<u>Conditions de fonctionnement :</u>

\* <u>Sens réversible :</u>

$\eta_1 > 0$ c'est à dire $\dfrac{tg(\beta_1 - \varphi)}{tg\beta_1} > 0$ autrement dit :

$\beta_1 > \varphi$

$= \beta_1 > tg\varphi$

$= \dfrac{p}{\pi d1} > tg\varphi$

$= d1 < \dfrac{p}{\pi tg\varphi}$

soit avec $tg\varphi = 0,2$ et $p = 12,7$ mm :

<u>$d_1 < 9,55$ mm</u>

\* <u>Sens irréversible</u>

$\eta_2 < 0$, soit

$$\dfrac{tg(\beta_2 - \varphi)}{tg\beta_2} < 0$$

Le même raisonnement que pour le sens réversible conduit à :

$$d_2 > \dfrac{p}{\pi tg\varphi} \text{ d'où } \underline{d_2 > 9,55 \text{ mm}}$$

\* Si on choisit :

$d_1 = 7$ mm, on a $\eta_1 = 0,25$ (sens réversible)

et $d_2 = 10$ mm, on a $\eta_2 < 0$ (sens irréversible)

On constate donc que par une variation de 30% du diamètre d, on passe d'un rendement négatif à un rendement de 0,25.

3 - <u>Variations simultanée des angles $\alpha$ et $\beta$</u>

<u>Conditions de fonctionnement</u>

Supposons $p = 12,7$ mm et $tg\varphi = 0,2$

<u>Sens réversible</u>

Comme dans le paragraphe 2 précédent on obtient :

$$d_1 < \dfrac{p}{\pi tg\varphi} = \dfrac{12,7}{\pi \times 0,2} = \underline{20,21 \text{ mm.}}$$

<u>Sens réversible</u>

$$\eta_2 = \dfrac{\cos\alpha \ tg\beta - tg\varphi}{tg\beta \ (\cos\alpha + tg\varphi \ tg\varphi)} < 0$$

d'où : $\cos\alpha \ tg\beta - tg\varphi < 0$

et $\underline{\cos\alpha \ tg\beta < 0,2}$

avec $\alpha = 65°$ et $d_2 = 10$ mm soit $\beta = 22°$,

on obtient : $\cos\alpha \ tg\beta = 0,171$

d'où $\eta_2 < 0$, c'est-à-dire le résultat souhaité.

## Revendications

1. Ensemble comprenant un dispositif vis-écrou, un poussoir (9, 48,...) associé à la vis (1, 4, 6,...) et un organe élastique (20, 47,...) pouvant exercer sur la vis une poussée axiale, le poussoir, susceptible d'exercer sur la vis une poussée axiale opposée à la précédente, pouvant entraîner le déplacement de la vis par rapport à l'écrou (3, 17, 23,...), le filet (2, 5,...) de la vis présentant des angles d'hélice ($\beta$) et de pression ($\alpha$) déterminés, caractérisé en ce que les angles d'hélices ($\beta$ et de pression ($\alpha$) sont choisis de manière que dans un premier sens dit réversible, la vis (6, 45,...) puisse, sous la poussée axiale exercée dans ce sens par l'organe élastique (20, 47,...) effectuer un mouvement hélicoïdal dans l'écrou (8, 50,...) chaque fois que disparait ou se réduit suffisamment la poussée exercée par le poussoir, et que dans un second sens dit irréversible, opposé au premier, la vis sollicitée par l'intermédiaire du poussoir par un effort très supérieur a l'effort de l'organe élastique dans ce second sens ne puisse effectuer ni translation, ni rotation dans l'écrou.

2. Ensemble selon la revendication 1, dans lequel le filet (5) de la vis (4) présente en section deux flancs (5a, 5b) inclinés sur une perpendiculaire a l'axe (X-X) de la vis (4), caractérisé en ce que les angles de pression ($\alpha1$, $\alpha2$) des deux flancs sont différents, de préférence l'un ($\alpha1$) étant compris entre zéro et une valeur faible, et l'autre angle de pression ($\alpha2$) étant elevé.

3. Ensemble selon l'une des revendications 1 et 2, dans lequel les surfaces du filet de la vis et de l'écrou en contact mutuel, sont affectées d'un angle de frottement ($\varphi$) formé entre la force (N) nécessaire pour faire glisser les deux surfaces l'une sur l'autre et la résultante (R) entre cette force (N) et l'effort presseur (T) appliquant lesdites surfaces l'une sur l'autre, caracterise en ce que l'angle de pression ($\alpha$) et l'angle d'hélice ($\beta$) sont compris dans des fourchettes de valeurs delimitées par les deux conditions simultanées ci-dessous :

– pour le sens réversible (angle de pression faible ou nul) :

$$\dfrac{tg \ (\beta-\varphi)}{tg\beta} > 0$$

– pour le sens irréversible (angle de pression elevé) :

$$\dfrac{\cos\alpha \ tg\beta - tg\varphi}{tg\beta(\cos\alpha + tg\varphi \ tg\beta)} < 0.$$

la valeur limite supérieure de ($\alpha$) étant la valeur de l'angle de coincement et la valeur limite inférieure de

($\alpha$) etant celle pour laquelle il n'existe aucun angle d'hélice ($\beta$) permettant la reversibilité dans un sens et l'irreversibilité dans l'autre sens.

4. Ensemble selon l'une des revendications 1 et 2, caractérisé en ce que, l'angle de pression ($\alpha$) etant pratiquement nul et le pas (P) de la vis (10) constant, le filet (11) de la vis (10) presente deux angles d'helice différents par realisation d'une vis a deux diametres moyens differents, choisis de telle façon qu'au premier angle d'helice ($\beta1$) corresponde le sens reversible et au second angle d'helice ($\beta2$) corresponde le sens irreversible avec la condition :

$$\beta1 > \varphi > \beta2$$

5. Ensemble selon la revendication 4, caracterise en ce que l'un (12) des flancs (12, 16) du filet (11) de la vis (10) est profilé en marche d'escalier de façon a présenter un gradin (13) entre la surface du noyau (14) de la vis et le sommet du filet (11) delimitant deux portions de flancs successives (12a, 12b), tandis que l'autre flanc (16) est rectiligne, les diametres moyens differents (d1, d2) correspondant ainsi aux deux portions de flancs (12a, 12b) étant choisis de manière a obtenir un sens reversible par poussée de la portion de flanc (12a) de plus petit diamètre (d1) contre l'écrou (17) et un sens irreversible par poussée contre l'écrou (17) du flanc (16) opposé au gradin (13).

6. Ensemble selon la revendication 1, caractérisé en ce que le filet de la vis (22) est constitue de deux dents (18, 19) distinctes dont les angles de pression sont pratiquement nuls mais dont les hauteurs au-dessus du noyau de la vis (22) sont inégales de telle sorte que les dents (19) de plus grande hauteur aient un angle d'hélice inférieur à celui des autres dents (18), et le taraudage (82) de l'écrou (23) présente de préférence un décrochement (84) en regard de la dent (19) la plus haute afin d'augmenter le diamètre moyen (d4) d'appui de la dent (19) contre l'écrou dans le sens irréversible de fonctionnement (Figures 8-9).

7. Ensemble selon la revendication 5, dans lequel le pas (p) de vis est le meme dans les deux sens de manoeuvre de la vis (26), caracterise en ce que le flanc (31) du filet (25) opposé au gradin (27) a un angle de pression eleve (Figures 11-12).

8. Ensemble selon la revendication 1, caractérisé en ce que le filet de la vis est constitué en section axiale par deux dents (33, 34) distinctes, de hauteurs inégales au-dessus de la surface du noyau de la vis, dont l'une (33) a des angles de pression pratiquement nuls tandis que la dent (34) la plus haute presente du côté de l'autre dent (33) moins haute, une face (35) a angle de pression nul et du côté opposé une seconde face (36) ayant un angle de pression eleve, cette dernière étant susceptible de venir en appui contre une face inclinée correspondante (39) du taraudage (37) de l'écrou dans le sens irréversible de fonctionnement du dispositif (Figures 13-14).

9. Ensemble selon l'une des revendications 1 a 8, caractérisé en ce que le flanc du filet (49) travaillant dans le sens reversible d'avancement de la vis (45) presente un faible coefficient de frottement, tandis que le flanc travaillant dans le sens irreversible présente un coefficient de frottement elevé, au moyen par exemple des stries (51) d'un moletage usiné sur un materiau dur constituant la vis (45) tandis que l'écrou (46) est réalisé en un matériau moins dur.

10. Ensemble selon la revendication 1, caractérisé en ce que la vis (90) est divisee en deux parties de diamètres moyens (d1, d2) différents, les dents (94) ménagées sur la partie de plus grand diametre moyen (d2) ayant de ce fait un angle d'hélice ($\beta2$) inférieur a l'angle d'hélice ($\beta1$) des dents (91) usinees sur la seconde partie de la vis (90).

11. Ensemble selon la revendication 10, caractérise en ce que toutes les dents (91, 94) de la vis (90) ont des angles de pression nuls sur leurs deux faces respectives.

12. Ensemble selon la revendication 10, caractérisé en ce que les faces (98) des dents (97) dont le diamètre moyen d'appui (d2) est le plus elevé et qui sont tournées dans la direction opposée aux dents (91) dont le diamètre moyen d'appui (d1) est le plus petit, ont un angle de pression elevé, et des faces d'appui inclinées correspondantes (102) sont usinées dans le taraudage de l'écrou (Figure 13A).

13. Ensemble selon l'une quelconque des revendications précédentes, dans lequel la vis et le taraudage de l'écrou associé sont dimensionnées de façon a réserver entre ces deux éléments un jeu constitue par un jeu minimum de fonctionnement et par un jeu supplémentaire suffisant pour recupérer les déformations elastiques du système auquel est incorporé le dispositif.

14. Application de l'ensemble selon l'une des revendications 1 à 13 a un lève-glace (53) a câble (54) en boucle fermée, comprenant une gaine (56) traversée par le cable qui s'enroule autour d'un tambour (57), caractérisé en ce que la vis (58) de ce dispositif est sollicitée par la gaine (56) en poussée axiale dans un carter-ecrou (59) contenant un ressort (61) exerçant sur la vis (58) une force opposée à la poussee de la gaine, laquelle pousse la vis (59) dans le sens irréversible tandis que le ressort (61) la pousse dans le sens reversible afin de rattraper le jeu du a l'allongement progressif du cable.

15. Application de l'ensemble selon l'une des revendications 1 a 13 a la compensation automatique d'un jeu axial, notamment dans un moto-reducteur electrique (62), comportant un axe (63) dont les extrémités viennent porter contre des butées (66), caractérise en ce que la vis (67) est logée dans un carter-écrou (68), soumise a la poussee axiale d'un ressort (69) intérieur au carter et forme a son extremité la butee (66) de retenue de l'axe (63), cette poussee s'exerçant dans le sens reversible pour maintenir l'arbre (63) en appui sur la butee terminale (66) de la vis (67).

16. Application de l'ensemble selon l'une des revendications 1 à 13 à un frein a main (71) notamment sur une bicyclette ou une moto, ainsi qu'a une commande de cable d'embrayage.

**Patentansprüche**

1. Anordnung mit einer Schraube-Mutter-Vorrichtung, einem Stößel (9, 48, ...), der der Schraube (1, 4, 6, ...) zugeordnet ist, und einem elastischen Organ (20, 47, ...), das auf die Schraube eine axiale Kraft ausüben kann, wobei der Stößel, der dazu geeignet ist, auf die Schraube eine zu der vorgenannten Kraft entgegengesetzte Kraft auszuüben, die Verstellung der Schraube gegenüber der Mutter (3, 17, 23, ...) hervorrufen kann, das Gewinde (2, 5, ...) der Schraube vorbestimmte Steigungs- und Flankenwinkel (β, α) aufweist, **dadurch gekennzeichnet, daß** die Steigungs- und Flankenwinkel (β, α) derart gewählt sind, daß in einem ersten, reversiblen Sinn die Schraube (6, 45, ...) unter der axialen Kraft, die in diesem Sinn durch das elastische Organ (20, 47, ...) ausgeübt wird, eine Schraubenbewegung in der Mutter (8, 50, ...) immer dann ausführen kann, wenn die Kraft, die von dem Stößel ausgeübt wird, verschwindet oder sich ausreichend vermindert, und in einem zweiten, irreversiblen Sinn entgegengesetzt zum ersten die Schraube, die mittels des Stößels mit einer Kraft beaufschlagt wird, die sehr viel größer als die Kraft von dem elastischen Organ in dem zweiten Sinn ist, weder eine translatorische noch eine Drehbewegung in der Schraube ausführen kann.

2. Anordnung nach Anspruch 1, bei der das Gewinde (5) der Schraube (4) im Schnitt zwei Flanken (5a, 5b) aufweist, die auf einer Senkrechten zur Achse (X-X) der Schraube (4) geneigt sind, **dadurch gekennzeichnet, daß** die Flankenwinkel (α1, α2) der zwei Flanken verschieden sind, wobei vorzugsweise der eine (α1) zwischen Null und einem geringen Wert lift und der andere (α2) höher ist.

3. Anordnung nach einem der Ansprüche 1 und 2, bei der die Flächen des Gewindes der Schraube und der Mutter, die in gegenseitiger Berührung sind, durch einen Reibungswinkel (γ) beaufschlagt sind, der zwischen der Kraft (N), die zum Gleitenlassen der zwei Oberflächen aneinander notwendig ist, und der Resultierenden (R) zwischen dieser Kraft (N) und der Druckkraft (T) gebildet ist, die die beiden Oberflächen aufeinanderdrückt, **dadurch gekennzeichnet, daß** der Flankenwinkel (α) und der Steigungswinkel (β) zwischen Wertepaaren liegen, die durch die zwei nachfolgenden Bedingungen gleichzeitig vorgegeben sind:

– für den reversiblen Sinn (Flankenwinkel schwach oder Null):

$$\frac{tg\,(\beta - \gamma)}{tg\beta} > 0$$

– für den irreversiblen Sinn (erhöhter Flankenwinkel):

$$\frac{cos\alpha\,tg\beta - tg\varphi}{tg\,(cos\alpha + tg\varphi\,tg\beta)} < 0,$$

wobei der obere Grenzwert von (α) der Wert des Übereinstimmungswinkels ist und der untere Grenzwerte von (α) jener ist, für den kein Steigungswinkel (β) existiert, die Reversibilität in einem Sinn und die Irreversibilität in dem anderen Sinn erlaubt.

4. Anordnung nach einem der Ansprüche 1 und 2, **dadurch gekennzeichnet, daß** bei einem Flankenwinkel (α) von praktisch Null und einer konstanten Steigung (P) der chraube (10) das Gewinde (11) der Schraube (10) zwei unterschiedliche Steigungswinkel für die Realisierung einer Schraube mit zwei unterschiedlichen mittleren Durchmessern aufweist, die derart gewählt sind, daß der erste Steigungswinkel (β1) dem reversiblen Sinn und der zweite Steigungswinkel (β2) dem irreversiblen Sinn entspricht mit der Bedingung:

$$\beta1 > \varphi > \beta2$$

5. Anordnung nach Anspruch 4, **dadurch gekennzeichnet, daß** die eine (12) der Flanken (12, 16) des Gewindes (11) der Schraube (10) ein treppenförmiges Profil hat, um eine Stufe (13) zwischen der Oberfläche des Kerns (14) der Schraube und dem Scheitel des Gewindes (11) zu bilden, der die zwei Abschnitte aufeinanderfolgender Flanken (12a, 12b) begrenzt, während die andere Flanke (16) geradlinig ist, wobei die unterschiedlichen mittleren Durchmesser (d1, d2), die somit den zwei Flankenabschnitten (12a, 12b) entsprechen, derart gewählt sind, daß ein reversibler Sinn für den Schub des Flankenabschnitts (12a) kleineren Durchmessers (d1) gegen die Mutter (17) und ein irreversibler Sinn durch den Schub gegen die Mutter (17) von der zu der Stufe (13) entgegengesetzten Flanke (16) erhalten wird.

6. Anordnung nach Anspruch 1, **dadurch gekennzeichnet, daß** das Gewinde der Schraube (22) von zwei einzelnen Zähnen (18, 19) gebildet ist, von denen die Flankenwinkel praktisch Null sind, deren Höhen über dem Kern der Schraube (22) jedoch derart ungleich sind, daß die Zähne (19) größerer Höhe einen Steigungswinkel haben, der kleiner als der der anderen Zähne (18) ist und daß das Gewinde (82) der Mutter (23) vorzugsweise einen Versatz (24) gegenüber dem höchsten Zahn (19) hat, um den mittleren Anlagedurchmesser (d4) des Zahns (19) an der Mutter im irreversiblen Sinn der Funktion zu verbessern (Fig. 8, 9).

7. Anordnung nach Anspruch 5, bei der die Steigung (p) der Schraube die gleiche in den zwei Betätigungssinnen der Schraube (26) ist, **dadurch gekennzeichnet, daß** die Flanke (31) des Gewindes (25) gegenüber der Stufe (27) einen erhöhten Flankenwinkel hat (Fig. 11, 12).

8. Anordnung nach Anspruch 1, **dadurch gekennzeichnet, daß** das Gewinde der Schraube im axialen Schnitt von zwei einzelnen Zähnen (33, 34) gebildet ist, die ungleiche Höhen über der Oberfläche des Kerns der Schraube haben, von denen der eine (33) Flankenwinkel hat, die praktisch Null sind, während der höchste Zahn (34) auf Seiten des anderen, weniger hohen Zahns (33) eine Seite (35) mit einem Flankenwinkel von Null und auf der zur zweiten Seite (36) entgegengesetzten Seite einen erhöhten Flankenwinkel aufweist, wobei letztgenannte Seite dazu geeignet ist, in Anlage an eine entsprechende geneigte Fläche (39) des Gewindes (37) der Mutter im irreversiblen Funktionssinn der vorrichtung zu kommen (Fig. 13, 14).

9. Anordnung nach einem der Ansprüche 1 bis 8, **dadurch gekennzeichnet,** daß die Flanke des Gewindes (49), die im reversiblen Betätigungssinn der Schraube (45) arbeitet, einen geringen Reibungskoeffizienten aufweist, während die Flanke, die im irreversiblen Sinn wirkt, einen erhöhten Reibungskoeffizienten aufweist, beispielsweise aufgrund von Riefen (51) einer Rändelung, die in ein hartes Material eingearbeitet ist, das die Schraube (45) bildet, während die Mutter (46) aus einem weniger harten Material besteht.

10. Anordnung nach Anspruch 1, **dadurch gekennzeichnet,** daß die Schraube (90) in zwei Teile unterschiedlicher mittlerer Durchmesser (d1, d2) unterteilt ist, wobei die Zähne (94), die an dem Teil größeren mittleren Durchmessers (d2) ausgebildet sind, aufgrund dieser Tatsache einen Steigungswinkel (β2) aufweisen, der kleiner als der Steigungswinkel (β1) der Zähne (91) ist, die an dem zweiten Teil der Schraube (90) ausgebildet sind.

11. Anordnung nach Anspruch 10, **dadurch gekennzeichnet,** daß alle Zähne (91, 94) der Schraube (90) Flankenwinkel von Null auf ihren entsprechenden zwei Seiten aufweisen.

12. Anordnung nach Anspruch 10, **dadurch gekennzeichnet,** daß die Flächen (98) der Zähne (97) , deren mittlerer Anlagedurchmesser (d2) größer ist und die in entgegengesetzter Richtung zu den Zähnen (91) kleineren mittleren Anlagedurchmessers (d1) gedreht werden, einen höheren Flankenwinkel haben, und daß die entsprechenden geneigten Anlageflächen (102) in das Gewinde der Mutter (Fig. 13a) eingearbeitet sind.

13. Anordnung nach einem der vorhergehenden Ansprüche, bei der die Schraube und das Gewinde der zugehörigen Mutter derart dimensioniert sind, daß zwischen diesen zwei Elementen ein Spiel verbleibt, das von einem minimalen Funktionsspiel und von einem zusätzlichen Spiel gebildet ist, das ausreichend ist, um die elastischen Verformungen des Systems aufzunehmen, an dem die Vorrichtung installiert ist.

14. Anwendung der Anordnung nach einem der Ansprüche 1 bis 13 bei einem Scheibenheber (53) mit endlosem kabelzug (54), enthaltend eine Hülle (56), die von dem kabel durchquert wird, das sich um eine Trommel (57) windet, **dadurch gekennzeichnet,** daß die Schraube (58) dieser Vorrichtung von der Hülle (56) auf axialen Druck in einem Mutterngehäuse (59) beaufschlagt wird, das eine Feder (61) enthält, die auf die Schraube (56) eine zur Druckkraft der Hülle entgegengesetzte Kraft ausübt, die auf die Schraube (59) im irreversiblen Sinn drückt, während die Feder (61) auf die Schraube im reversiblen Sinn drückt, um das Spiel, das aus einer zunehmenden Längung des kabels entsteht, aufzunehmen.

15. Anwendung der Anordnung nach einem der Ansprüche 1 bis 13 zur automatischen Kompensation eines axialen Spiels insbesondere in einem elektrischen Getriebemotor (62), der eine Achse (63) enthält, dessen Enden an Anschläge (66) zur Anlage kommen, **dadurch gekennzeichnet,** daß die Schraube (67) sich in einem Mutterngehäuse (68) befindet, der axialen kraft einer Feder (69) im Inneren des Gehäuses unterworfen ist und an seinem Ende den Anschlag (66) zum halten der Achse (63) bildet, wobei dieser Druck im reversiblen Sinn wirkt, um die Welle (63) in Anlage an dem Endanschlag (66) der Schraube (67) zu halten.

16. Anwendung der Anordnung nach einem der Ansprüche 1 bis 13 bei einer Handbremse (71) insbesondere bei einem Fahrrad oder Moped sowie bei einem Steuerkabel einer Kupplung.

## Claims

1. Assembly comprising a screw-and-nut device, a push rod (9, 48, ...) associated with the screw (1, 4, 6, ...) and an elastic member (20, 47, ...) capable of exerting axial thrust on the screw, the push rod, capable of exerting on the screw an axial thrust opposed to the previous one, being able to cause the displacement of the screw with respect to the nut (3, 17, 23, ...), the thread (2, 5, ...) of the screw having predetermined helix angles ($\beta$) and pressure angles ($\alpha$), characterized in that the helix angles ($\beta$) and pressure angles ($\alpha$) are chosen in such a way that, in a first direction termed reversible, the screw (6, 45, ...) can, under the axial thrust exerted in this direction by the elastic member (20, 47, ...), effect a helical movement in the nut (8, 50, ...) each time the thrust exerted by the push rod disappears or is sufficiently reduced, and that, in a second direction termed irreversible, opposite to the first direction, the screw actuated by means of the push rod by a force very much greater than the force from the elastic member in the said second direction can produce neither a translation nor a rotation in the nut.

2. Assembly according to Claim 1, in which the thread (5) of the screw (4) has in cross-section two flanks (5a, 5b) inclined with respect to a perpendicular to the axis (X-X) of the screw (4), characterized in that the pressure angles ($\alpha$1, $\alpha$2) of the two flanks are dif-

ferent, preferably with one ($\alpha$1) lying between zero and a small value and the other pressure angle ($\alpha$2) being large.

3. Assembly according to one of Claims 1 and 2, in which the surfaces of the thread of the screw and the nut in mutual contact are assigned an angle of friction ($\varphi$) formed between the force (N) required to make the two surfaces slide over each other and the resultant (R) of that force (N) and the thrusting force (T) pressing the said surfaces against each other, characterized in that the pressure angle ($\alpha$) and the helix angle ($\beta$) lie within the range of values bounded simultaneously by the following two conditions:

– for the reversible direction (pressure angle small or zero):

$$\frac{\tan(\beta - \varphi)}{\tan\beta} > 0$$

– for the irreversible direction (large pressure angle):

$$\frac{\cos\alpha \, \tan\beta - \tan\varphi}{\tan\beta(\cos\alpha + \tan\varphi \, \tan\beta)} < 0,$$

the upper limiting value of ($\alpha$) being the value of the wedge angle and the lower limiting value of ($\alpha$) being that for which there exists no helix angle ($\beta$) allowing reversibility in one direction and irreversibility in the other direction.

4. Assembly according to one of Claims 1 and 2, characterized in that, the pressure angle ($\alpha$) being substantially zero and the pitch (P) of the screw (10) being constant, the thread (11) of the screw (10) has two different helix angles through the production of a screw with two different mean diameters, chosen in such a way that the reversible direction corresponds to the first helix angle ($\beta$1) and the irreversible direction corresponds to the second helix angle ($\beta$2) with the condition:

$$\beta_1 > \varphi > \beta_2$$

5. Assembly according to Claim 4, characterized in that one (12) of the flanks (12, 16) of the thread (11) of the screw (10) has a profile in the shape of a step of a staircase so as to present a step surface (13) between the surface of the core (14) of the screw and the tip of the thread (11) bordering two successive portions of flanks (12a, 12b), while the other flank (16) is straight, the different mean diameters (d1, d2) thus corresponding to the two portions of the flanks (12a, 12b) being chosen in such a way as to obtain a reversible direction by a thrust from the portion of the flank (12a) of the smaller diameter (d1) against the nut (17) and an irreversible direction by a thrust against the nut (17) from the flank (16) opposite to the step surface (13).

6. Assembly according to Claim 1, characterized in that the thread of the screw (22) consists of two distinct teeth (18, 19) whose pressure angles are substantially zero but whose heights above the core of the screw (22) are unequal, so that the teeth (19) of greater height have a helix angle smaller than that of the other teeth (18), and the internal thread (82) of the nut (23) preferably has a kink (84) facing the higher tooth (19) in order to increase the mean diameter (d4) for which the tooth (19) bears against the nut in the irreversible direction of operation (Figures 8 - 9).

7. Assembly according to Claim 5, in which the pitch (p) of the screw is the same in both directions of operation of the screw ( 26 ), characterized in that the flank (31) of the thread (25) opposite the step surface (27) has a large pressure angle (Figures 11 - 12).

8. Assembly according to Claim 1, characterized in that the thread of the screw consists in axial cross-section of two distinct teeth (33, 34) of unequal heights above the surface of the core of the screw, one of which (33) has pressure angles that are substantially zero while the higher tooth (34) has on the side of the other lower tooth (33) a face (35) with a zero pressure angle and on the opposite side a second face (36) having a large pressure angle, the latter being capable of coming to bear against a corresponding inclined face (39) of the internal thread (37) of the nut in the irreversible direction of operation of the device (Figures 13 - 14).

9. Assembly according to one of Claims 1 to 8, characterized in that the flank of the thread (49) operating in the reversible direction of advance of the screw (45) has a small coefficient of friction, while the flank operating in the irreversible direction has a high coefficient of friction, by means for example of serrations (51) from knurling machined on a hard material forming the screw (45) while the nut (46) is produced from a softer material.

10. Assembly according to Claim 1, characterized in that the screw (90) is divided into two parts with different mean diameters (d1, d2), the teeth (94) cut on the part with the larger mean diameter (d2) having, because of this, a smaller helix angle ($\beta$2) than the helix angle ($\beta$1) of the teeth (91) cut on the second part of the screw (90).

11. Assembly according to Claim 10, characterized in that all the teeth (91, 94) of the screw (90) have zero pressure angles on their two respective faces.

12. Assembly according to Claim 10, characterized in that the faces (98) of the teeth (97) whose mean bearing diameter (d2) is larger and which are turned in the opposite direction to the teeth (91) whose mean bearing diameter (d1) is smaller have a large pressure angle, and the corresponding inclined bearing faces (102) are machined into the inner thread of the nut (Figure 13A).

13. Assembly according to any one of the preceding claims, in which the screw and the inner thread of the associated nut are dimensioned in such a way as to maintain between these two elements a clearance consisting of a minimum operating clearance and additional clearance sufficient to take up the elastic deformations of the system in which the device is incorporated.

14. Application of the assembly according to one of Claims 1 to 13 to a window winder (53) with a cable (54) in the form of a closed loop, consisting of a sheath (56) traversed by the cable which is wound around a drum (57), characterized in that the screw (58) of this device is actuated by the sheath (56) in axial thrust in a nut-housing (59) containing a spring (61) exerting on the screw (58) a force opposite to the thrust of the sheath, which pushes the screw (59) in the irreversible direction while the spring (61) pushes it in the reversible direction in order to take up the clearance due to the progressive stretching of the cable.

15. Application of the assembly according to one of Claims 1 to 13 to the automatic compensation of axial clearance, in particular in an electric motor speed reducing unit (62), comprising an axle (63) the ends of which come to bear against stops (66), characterized in that the screw (67) is seated in a nut-housing (68) subjected to the axial thrust from a spring (69) inside the housing and forms at its end the stop (66) retaining the axle (63), this thrust being exerted in the reversible direction so as to keep the shaft (63) bearing on the end stop (66) of the screw (67).

16. Application of the assembly according to one of Claims 1 to 13 to a hand-brake (71), in particular on a bicycle or a motor-cycle, and to a clutch control cable.

FIG.1

FIG. 2

FIG.3

FIG. 4

FIG.5

FIG.6

FIG.7

FIG.8

FIG.9

FIG.10

FIG. 8 A

FIG. 9 A

FIG. 8 B

FIG.11

FIG.12

FIG.13

FIG.14

FIG.15

FIG.13A

FIG.20

55-

54

53

57

56

52

FIG.16

FIG.17

63    64   65  66  67   69

FIG.18

66a    68

62

71

B        A

73

72

FIG.19

78        79

70  77  76    75

74

FIG. 21